# EUROPEAN PATENT APPLICATION

(11) **EP 4 740 736 A1**
(43) Date of publication of application: **13.05.2026**
(21) Application number: 24836121.4
(22) Date of filing: 05.07.2024
(51) Int. Cl.: A01N 65/42, A01G 7/06, A01P 21/00

(54) **PLANT GROWTH-PROMOTING COMPOSITION**

(30) Priority: 05.07.2023 JP 2023110942
(71) Applicant: Agri Smile, Inc., Tokyo 101-0052 (JP)
(72) Inventor: WATANABE, Hiroko, Tokyo 101-0052 (JP); SATO, Yoshiki, Tokyo 101-0052 (JP); HAYASHI, Daisuke, Tokyo 101-0052 (JP); ITO, Akio, Tokyo 101-0052 (JP)
(74) Representative: Hoffmann Eitle
(86) International application number: PCT/JP2024/024391
(87) International publication number: WO 2025/009609

(57) **Abstract**

A plant growth-promoting composition containing one or more selected from the group consisting of onion extract and onion powder as an active component.

## Description

### Technical Field

The present invention relates to a plant growth-promoting composition and a plant method of promoting plant growth.

### Background Art

Due to the current explosive population growth, producing sufficient amounts of food-producing plants has become a global challenge. In addition, problems such as land desertification caused by the reduction of green spaces and problems such as increasing surface temperatures caused by a global warming phenomenon have emerged, and environmental problems in plant growth are increasing. In other words, excessive stress on plants due to global environmental factors often causes problems in plant growth.

Consequently, there is a demand for techniques that enable more efficient harvests than conventional methods, and biostimulants have attracted attention as a new technique for alleviating plant damage caused by climate or soil conditions by controlling abiotic stress in plants, thereby providing healthy plants.

Patent Literature 1 discloses a plant stoma opening promoter containing stevia, and reports that heat stress resistance is improved by artificially promoting stoma openings in plants using stevia.

Patent Literature 2 discloses a gene activating composition which contains a yeast cell wall degradation product and activates ethylene and/or jasmonate signaling pathways, and reports that, when the yeast cell wall degradation product is administered to plants, the expression of plant defensin genes involved in antibacterial properties and disease prevention of the plant body is activated.

Patent Literature 3 discloses a method of increasing the yield of cereal grains by inoculating a cell wall-containing substance of a methanol-utilizing bacterium into a plant body for culturing cereal grains.

### Citation List

### Patent Literature

Patent Literature 1: Patent Publication JP-B-6741262
Patent Literature 2: Patent Publication JP-B-4931388
Patent Literature 3: Patent Publication JP-A-2019-180361

### Summary of Invention

### Technical Problem

As described above, studies conducted so far have been on improving abiotic stress resistance and increasing yields in plants using various materials, but there have been no reports on the use of onion extract or onion powder.

### Solution to Problem

The inventors conducted extensive studies and as a result, found that, among various materials, one or more selected from the group consisting of onion extract and onion powder serves as an active component for promoting plant growth by using a uniquely developed highly accurate screening method, and completed the present invention.

Specifically, the present invention is as follows.
[1] A plant growth-promoting composition containing one or more selected from the group consisting of onion extract and onion powder as an active component.
[2] The plant growth-promoting composition according to [1], having one or more plant growth-promoting effects selected from the group consisting of elongation of stems, leaves or roots, an increase in the number of leaves, promotion of flowering or fruiting, an increase in the number of flowers or fruits, an increase in the plant body weight or crop yield, greening, and promotion of tillering.
[3] The plant growth-promoting composition according to [1] or [2], having an effect of improving abiotic stress resistance.
[4] The plant growth-promoting composition according to [3], having an effect of improving stress resistance to one or more selected from the group consisting of temperature stress, chemical stress, light stress, drought stress, pH stress, salt stress, anoxic stress, herbivory stress, physical stress, and disease stress.
[5] The plant growth-promoting composition according to [3], which activates genes in a stress response system.
[6] A method of promoting plant growth, including applying a plant growth-promoting composition containing one or more selected from the group consisting of onion extract and onion powder as an active component to plants, or soil or a culture solution in which plants grows.
[7] The method of promoting plant growth according to [6], wherein the amount of the plant growth-promoting composition used with respect to the culture solution is 0.001 to 1 mass%.

### Advantageous Effect of Invention

When the composition containing one or more selected from the group consisting of onion extract and onion powder of the present invention is applied to plants, plant growth can be promoted more safely and less expensively compared to conventional materials.

### Brief Description of Drawings

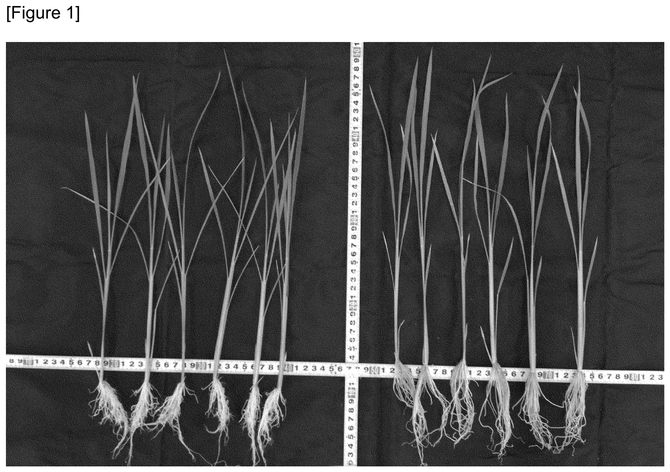

[Figure 1] Figure 1 is an image showing the improvement in rice plant root development observed when no onion extract or onion powder was added and when 0.36 g of a plant growth-promoting composition containing onion powder was added (Example 1).

### Description of Embodiments

Hereinafter, a form for implementing the present invention (hereinafter referred to as "the present embodiment") will be described in detail. Here, the present invention is not limited to the present embodiment, and can be variously modified without departing from the scope and spirit thereof.

### <Plant growth-promoting composition>

The plant growth-promoting composition of the present embodiment contains one or more selected from the group consisting of onion extract and onion powder as an active component. Onions are plants of the genus *Allium* in the family Amaryllidaceae. Specific examples thereof include *Allium cepa.* The variety, origin and the like of onions are not particularly limited, and examples thereof include yellow onions, white onions, purple onions (red onions), salad onions, small onions, pearl onions, ruby onions, spring onions, and shallots, and more specific examples thereof include varieties such as Kita-Wase 3, SN-1, SN-3, SN-3A, Okhotsk No. 222, Okhotsk No. 1, Okhotsk No. 333, Kita-Momiji 2000, Super Kita-Momiji, H235, Kita-Hayate No. 2, Bullet Bear, Arrow Bear, Power Wolf, Brown Bear, Kodiak, Ikol, Vegas, Hayajiro, Sarari, Caroe One, Ezomaru, Sarasara Gold, Quergold, Kurenai, R-5, Red Eye Early, Red Eye II, Red Eye, Red One, Yukigeshiki 2, Yukigeshiki, White No. 1, Kitawase No. 1, Pekoros 22 Super, Pekoros F Okhotsk, Kitami Yellow, Sapporo Yellow, Sorachi Yellow, OPP-5, OMP-3, OSP-3, CS3-12, Toyohira, Shippo Wase No. 7, Sonic, Tarzan, Turbo, Uzushio, Advance, Answer, Neo Earth, Power, Keru Tama, and Momiji.

In the present embodiment, the onion extract is a concentrate of specific components extracted from onions, and the parts used in extraction are not particularly limited, and examples thereof include leaf blades, leaf sheaths (petioles), bulbs (scale leaves, storage leaves, edible parts), bark (protective leaves), cores, stems (flower stalks and flower bulb bolts), and roots, and these may be used singly or in combination. The onion extract can be obtained, for example, by the method described later in <Method for preparing plant growth-promoting composition>. The onion powder is obtained by drying and pulverizing onions or onion extract, and is not particularly limited.

The plant growth-promoting composition in the present embodiment is a composition having a plant growth promoting effect, and here, examples of plant growth promoting effects include growth promoting effects such as elongation of stems, leaves or roots, an increase in the number of leaves, promotion of flowering or fruiting, an increase in the number of flowers or fruits, an increase in the plant body weight or crop yield, greening, and promotion of tillering.

More specifically, the case where a plant growth promoting effect is observed refers to, for example, a case in which the physical weight increment (%) or dry weight increment (%) is increased when the plant growth-promoting composition of the present embodiment is used compared to when the plant growth-promoting composition is not used. The physical weight increment (%) or dry weight increment (%) when using the plant growth-promoting composition is increased by preferably 10% or more, more preferably 20% or more, and still more preferably 30% or more compared to when the plant growth-promoting composition of the present embodiment is not used. The case where the plant growth promoting effect is observed includes a situation where no growth is observed at all when the plant growth-promoting composition is not used, but growth is observed when the plant growth-promoting composition is used. Here, the numerical values are average values for all plants to which the plant growth-promoting composition is applied.

Other plant growth promoting effects include the following effects of improving plant activity.
1) root elongation and improved root establishment rate
2) increased nutrient absorption efficiency
3) induction of flower buds, promotion of flowering, and increase in fruit production
4) accumulation of components such as sugars
5) increased water saving effect
6) callus induction effect
7) increased size of plant bodies, particularly elongation or enlargement of above-ground and below-ground parts
8) wound repair
That is, the plant growth-promoting composition of the present embodiment may have the above effects 1) to 8) in addition to the growth promoting effect such as elongation of stems, leaves or roots, an increase in the number of leaves, promotion of flowering or fruiting, an increase in the number of flowers or fruits, an increase in the plant body weight or crop yield, greening, or promotion of tillering.

The plant growth-promoting composition in the present embodiment may have an abiotic stress resistance improving effect. That is, the composition may impart resistance to overall abiotic (environmental) stresses to which plants are exposed. Here, examples of the abiotic stresses include temperature stress such as high temperature stress and low temperature stress, chemical stress, light stress, drought stress, oxidative stress, pH stress, salt stresses such as osmotic stress, anoxic stress, herbivory stress, physical stress, and disease stress. The herbivory stress may be stress resulting from reduced nutrient absorption accompanying rooting suppression due to herbivory damage, and the disease stress may be stress due to a physiological dysfunction of a plant caused by a disease.

In the present embodiment, the term "abiotic stress resistance" refers to a trait that allows plants to grow normally without being substantially affected by undesirable effects such as growth failure (withering), poor growth (for example, bleaching or yellowing of plant bodies, reduced root length or reduced number of leaves), reduced growth rate, or reduced plant body weight or crop yield even under growth conditions involving environmental stress. When the abiotic stress resistance of plants is improved using the plant growth-promoting composition of the present embodiment, the plants can be grown normally even in external environments that are unfavorable to the growth of ordinary plants.

Examples of the temperature stress resistance imparting effect of the plant growth-promoting composition in the present embodiment include the effect of stimulating normal growth under high temperature conditions of 35°C to 55°C and low temperature conditions of 0°C to 10°C. The salt stress imparting effect enables normal growth in the presence of 0.1% to 3.0% by mass sodium chloride. The drought stress resistance imparting effect enables normal growth at a relative humidity of 10% to 40% as well.

Examples of the chemical stress resistance imparting effect of the plant growth-promoting composition in the present embodiment include the effect of stimulating normal growth in a state of deficiency of chemical substances that serve as nutrient sources for plants, such as phosphorus. A chemical substance deficient state may be, for example, a state in which the amounts of chemical substances are below amounts of nutritional components presented in the following Table 1, and specifically, a state in which the amount of nutritional components may be about one-fifth of the amount presented in Table 1.

In the present embodiment, the abiotic stress resistance of plants can be evaluated by, for example, the following means. The presence of salt stress resistance can be confirmed by growing a target plant in a medium or soil containing an appropriate concentration of a salt under conditions of a growth temperature and growth period suitable for the plant and evaluating its phenotype. The presence of drought stress resistance can be confirmed by growing a target plant under conditions of a growth temperature, growth humidity and growth period that represent a drought state for the plant and evaluating its phenotype. In addition, the presence of low-temperature stress resistance can be confirmed by acclimating a target plant at a low temperature that does not cause freezing, and then growing it under conditions of a growth temperature and growth period suitable for the plant, and evaluating its phenotype.

When the plant growth-promoting composition in the present embodiment has an effect of improving abiotic stress resistance, it may activate genes in a stress response system. The genes in the stress response system are not particularly limited, and examples thereof include genes generally known as indicators of response to temperature stress or drought stress.

The plant growth-promoting composition in the present embodiment may contain onion extract or onion powder singly, both onion extract and onion powder, or onion extract and onion powder in combination with one or more agriculturally acceptable ingredients. The agriculturally acceptable ingredients are not particularly limited, but examples thereof include solvents, carriers, excipients, binders, auxiliary solubilizers, stabilizers, thickeners, swelling agents, lubricants, surfactants, oily liquids, buffers, disinfectants, antifreeze agents, antifoaming agents, colorants, antioxidants, and additional active components. As the agriculturally acceptable carriers, agriculturally acceptable liquid carriers such as water, mineral oil fractions such as kerosene or diesel, oils derived from plants or animals, cyclic or aromatic hydrocarbons (for example, paraffins, tetrahydronaphthalene, alkylated naphthalenes or their derivatives, or alkylated benzenes or their derivatives), alcohols (for example, methanol, ethanol, propanol, butanol, or cyclohexanol), ketones (for example, cyclohexanone), or amines (for example, N-methylpyrrolidone), or mixtures thereof are preferred.

When the plant growth-promoting composition in the present embodiment contains one or more additional active components, various compounds having environment stress resistance improving activity known in the present technical field can be applied as the additional active components. When the plant growth-promoting composition contains such one or more additional active components, there is a tendency for the abiotic stress resistance of the plants to be further improved.

The plant growth-promoting composition in the present embodiment can be used in combination with conventionally known agricultural materials such as pesticides and fertilizers, and it is preferable to use components derived from microorganisms, bacteria such as actinomycetes or yeast as the agricultural materials.

The plant growth-promoting composition in the present embodiment can be used as an agricultural chemical formulation or pesticide to promote plant growth. The plant growth-promoting composition may be in any form, for example, a solid (for example, powder or granules) or a liquid (for example, a solution or suspension), and it is preferably used in a liquid form such as a solution or a suspension. When the composition is used as a solution, it may be in a liquid state or may be used as a liquid prepared just before application.

The formulation of the plant growth-promoting composition of the present embodiment is not particularly limited, and can be prepared into a formulation commonly used in the present technical field such as an emulsion, a wettable powder, a liquid, a water-soluble powder, a dusting powder, a powder, a paste or a granule.

In the present embodiment, the plants to which the plant growth-promoting composition is applied are not particularly limited, and include, for example, angiosperms and gymnosperms. Examples of target plants *Asteraceae* plants such as chrysanthemums and gerberas, family of Solanaceae plants such as potatoes, tomatoes and eggplants, family of Brassicaceae plants such as rapeseed and mustard greens, family of Poaceae plants such as rice plants, corn, wheat, sugarcane, and barley, family of Fabaceae plants such as soybeans, family of Apiaceae plants such as carrots,family of Lamiaceae plants such as basil, mint, and rosemary, family of Convolvulaceae plants such as morning glories, family of Salicaceae plants such as poplars, family of Euphorbiaceae plants such as castor beans, cassava, and jatropha, family of Convolvulaceae plants such as sweet potatoes, family of Rutaceae plants such as oranges and lemons, family of Rosaceae plants such as cherry blossoms and roses, family of Orchidaceae plants such as genus *Phalaenopsis,* family of Gentianaceae plants such as Turkish bellflower, family of Primulaceae plants such as cyclamens, family of Violaceae plants such as pansies, family of Liliaceae plants such as lilies, family of Amaranthaceae plants such as sugar beets, family of Vitaceae plants such as grapes, family of Cupressaceae plants such as cedars and cypresses, family of Oleaceae plants such as olives and osmanthus, and family of Pinaceae plants such as red pine.

The target plant may include not only the entire plant (that is, the complete plant body) but also parts of plants such as plant tissues or organs (for example, cut flowers or vegetative propagation organs such as rhizomes, tuberous roots, bulbs or runners), cultured cells and/or callus.

The plant growth-promoting composition in the present embodiment can be applied to the entire plant or parts thereof (for example, seeds, seedlings or the entire mature plant or parts thereof) at any growth stage, including before plant germination or after plant germination.

### <Method for preparing plant growth-promoting composition>

The method of preparing a plant growth-promoting composition can be achieved, for example, by obtaining onion extract or onion powder and then mixing it with the above agriculturally acceptable component as necessary.

The method for obtaining onion extract is not particularly limited, and general methods for extracting plant extracts can be used. Specifically, onion extract can be obtained by, for example, a method including a step of crushing onion bulbs and then removing impurities to obtain onion juice; a step of concentrating the onion juice obtained in the previous step to obtain an onion concentrate; and a step of fractionating the onion concentrate obtained in the previous step to obtain onion extract containing specific components. In the step of obtaining onion extract, hot water extraction and solvent extraction using various solvents can be used as a method for extracting the extract. Examples of the hot water extraction include a method in which onions are chopped, water is then added to the onions, and soluble components are extracted at 60°C to 100°C. Examples of the solvent extraction include a method in which onions are treated at a temperature of -15°C to -25°C for a time sufficient to destroy the cell membranes and then extraction is performed with water or an alcohol-based solvent.

The method for obtaining onion powder is not particularly limited, and the onion powder can be obtained by drying fresh or frozen onions or onion extract by a method such as hot air drying, air drying, dry heat drying, or drying under a reduced pressure, and then crushing the dried product into a powder.

### (Crushing and removal step)

The crushing of onions can be performed using fresh onions or dried onions, for example, by a mixer. When crushing of onions, an appropriate amount of water may be added to facilitate the treatment by a mixer or the like. The crushed onions are filtered using filter cloth, filter paper or the like to obtain onion juice from which impurities have been removed. When filtration is performed, an extraction solvent such as water or an alcohol may be added in advance. Instead of filtration, impurities may be removed by a method of obtaining a supernatant using a centrifuge.

### (Concentration step)

The obtained onion juice can be concentrated using a rotary evaporator or the like to obtain an onion concentrate. Concentration may be performed using a centrifugal evaporator or by freeze-drying. The concentration rate during concentration is preferably 3-fold to 30-fold, more preferably 4-fold to 20-fold. When the concentration rate is 5-fold or more, since the amount of the plant growth-promoting composition added to plants is reduced, handling properties are improved and the transportation costs tend to be diminished; and when the concentration rate is 30-fold or less, there is a tendency that the plant growth-promoting composition contains less precipitates and handling is easier.

In preparation of the plant growth-promoting composition, concentration of the onion juice is not essential, and the obtained onion juice may be directly subjected to the following fractionation step.

### (Fractionation step)

The obtained onion concentrate can be fractionated through a column or the like to obtain onion extract containing specific components In the fractionation step, for example, when the concentrate passes through a column, hydrophilic fractions and hydrophobic fractions are obtained, and among them, hydrophilic fractions are preferably used as onion extract. In addition, the onion concentrate may be subjected to a heat treatment in an autoclave or the like before it is fractionated through a column or the like.

The onion extract obtained in the fractionation step may, if necessary, be further subjected to purification treatment or a highly active fraction separation treatment. Examples of the purification treatment include treatments using filtration, adsorption (ion exchange resin column, activated carbon column, or the like), and the like. Examples of the highly active fraction separation treatment include gel filtration, adsorption treatment, silica gel column chromatography, and HPLC treatment, and the like.

### <Method of promoting plant growth>

The method of promoting plant growth in the present embodiment is a method of promoting plant growth by applying the above-described composition containing one or more selected from the group consisting of onion extract and onion powder as an active component to plants, or soil or a culture solution in which plants grow. In the method, the plant growth-promoting composition can be applied to plants or parts thereof (for example, seeds, seedlings or mature plant body) at any growth stage, including before germination or after germination. In addition, the plant growth-promoting composition can be applied not only to the plants themselves but also to the soil, medium or culture solution in which the plants grow. The plant growth can be promoted by applying the plant growth-promoting composition to the plants in the growth stage or the soil, medium or culture solution in which the plants grow.

The number of times the plant growth-promoting composition is applied to plants may be once or a plurality of times. In addition, when the plant growth-promoting composition is applied at a plurality of application periods, it may be applied once or a plurality of times at each application period.

Means for applying the plant growth-promoting composition to plants includes, for example, addition, spraying, coating, and immersion. These may be performed alone or two or more thereof may be performed in combination.

Regarding the amount of the plant growth-promoting composition applied to plants, when the plant growth-promoting composition is applied to a culture solution in which plants grows, the amount of the plant growth-promoting composition used with respect to the culture solution is preferably 0.001 to 1 mass%. When the amount of the plant growth-promoting composition used is within the above range, a sufficient plant growth promoting effect tends to be obtained.

Here, a preferable numerical range of the usage amount varies depending on the concentration rate of the onion juice described above, but the usage amount is a preferable numerical range when the concentration rate is 3- to 30-fold.

### Examples

The present invention will be explained more specifically using Examples and Comparative Examples, but the present invention is not limited to these Examples in any way.

### (Method for measuring root weight)

The roots were identified based on the color and shape of rice plants, and the weight of the identified roots was measured using a microbalance.

### [Example 1]

After 246.5 g of onion bulbs was sliced at intervals of 1 to 10 mm, 100 g of water was added to the slices, and the slices were crushed using a mixer. Impurities were removed by filtration using filter cloth and filter paper. The obtained filtrate was concentrated about 10-fold using a rotary evaporator to obtain onion extract.

The solution containing a fraction prepared by subjecting the onion extract obtained above to fractionation and heat treatment was added to 900 mL of a culture solution in which rice plants grow by 0.36 g (0.04 mass%), and the influence of the solution on the rice plants was investigated. As a result, the weight of rice plant roots increased by 58.5% compared to a case where the onion extract was not added, demonstrating the effect of improving the root spread of rice plants (see Figure 1).

Regarding the culture solution before the onion extract was added thereto, a culture solution that was adjusted to contain nutritional components in amounts to be about one-fifth of the amounts of the respective nutritional components presented in Table 1 below was used.

**[Table 1]**

| **Table 1 Kimura B solution composition table** | |
|---|---|
| **Component** | **Amount (mg/l)** |
| **N** | **23.0** |
| **(NO₄-N)** | **10.2** |
| **(NO₂-N)** | **12.8** |
| **P₂O₅** | **13.0** |
| **K₂O** | **17.2** |
| **CaO** | **20.5** |
| **MgO** | **22.1** |
| **Fe₂O₃** | **2∼3** |

### [Example 2]

The changes of the gene expression in rice plants by onion extract was also evaluated.

### (A) Sample preparation

### • Preparation of rice plant body (control (CT) and onion-treated fields)

With regard to rice plants growing under the same experimental cultivation conditions as in Example 1, plants were prepared in two fields of a CT field and an onion-treated field. Thereafter, RNA was extracted from the tissues of the plants.

Onion-treated field: Onion extract was added to the culture solution in which rice plants grow, and the field was used to investigate the influence on the gene expression in rice plants.

Culture solution for CT field: The same treatment as for the onion extract-treated field was carried out except that the onion extract was not added.

### • RNA extraction

RNA samples were obtained using Maxwell RSC Plant RNA Kit (Promega) and Maxwell RSC Instrument (Promega) according to the instructions.

### • Confirmation of RNA quality

It was confirmed that quality of RNA samples was satisfactory using a measurement instrument: Agilent 2100 Bioanalyzer <G2939A> (Agilent Technologies), a reagent kit: Agilent RNA6000 Nano kit <5067-1511> (Agilent Technologies), and analysis software: 2100 expert software <version B.02.07> (Agilent Technologies), and then the samples were used for library preparation.

### • Library preparation

A library for next-generation sequencer NextSeq was prepared using the QuantSeq 3' mRNA-Seq Library Prep Kit according to the following steps.
1. Use of 100 ng of total RNA
2. cDNA synthesis using oligo(dT) primer
3. Removal of template mRNA
4. Double-stranded cDNA synthesis using random primer
5. 14-cycle PCR using indexed adapter
6. Purification using bead

### (B) Analysis by next-generation sequencer

### • Sequence analysis

Instrument: NextSeq500 (illumina, Inc.)
Reagent: NextSeq 500/550 High Output Kit v2.5 (75 Cycles) <20024906> (illumina, Inc.)

### • Sequence (outline)

Sequencing was performed using NextSeq500 according to the following steps.
1. Addition of sequencing reagent
2. Single base extension reaction
3. Removal of unreacted base
4. Taking in of fluorescent signal
5. Removal of protecting group and fluorescence
6. Repetition of cycles (2 cycles, 3 cycles, and so forth) up to 75 cycles

### (C) Data analysis

### • Primary data analysis

Analysis program: bcl2fastq ver. 2.20 (illumina, Inc.)
A fastq file was created from the acquired reads using the program bcl2fastq (illumina, Inc.).

### • Secondary data analysis

OS of computer for analysis: Ubuntu Desktop 22.04.4 LTS
Analysis software: FastQC, hisat2, samtools, HTSeq, DESeq2
The analysis was performed using the software mentioned above.

### 1 Examination of quality of reads

The quality of the bases contained in the acquired fastq file was examined using FastQC.

### 2 Mapping and sorting

Mapping to Oryza sativa reference genome Oryza sativa Japonica Group (assembly IRGSP-1.0) was performed using hisat2. The file was then sorted and converted to binary data using samtools.

### 3 Read counting

The number of mapped reads was counted using htseq-count in HTSeq.

### 4 Statistical analysis

The gene expression levels in the CT field and onion-treated field were compared using the DESeq2 package in the statistical package R.

### [Result]

### Comparison of expression level between two groups

Comparison between the two groups was performed using a generalized linear model. The fold change values (= onion-treated field/CT field) and adjusted p-values of the genes of which the expression levels significantly increased in the onion-treated field are presented below.

**[Table 2]**

| Name of gene | Tissue of interest | Fold change | adjusted p value |
|---|---|---|---|
| PH01;2 | Roots | 3.27 | < 0.001 |
| WRKY71 | Above-ground part | 1.36 | < 0.05 |

As the measurement results of gene expression level in Table 2, the expression level of PHO1;2, a gene that contributed to chemical stress resistance, increased by 3.27-fold in the roots by the use of onion extract. It has been reported that this enzyme is present on the surface of roots and directly interacts with external phosphorus, and that the absorbed phosphorus amount increases as this gene expression level increases under phosphorus deficient conditions (Reference 1). Furthermore, it has been reported that similar genes for this molecule exist in a wide range of plants, such as wheats, red peppers, lettuce, tomatoes, and cacao, in addition to thale cress and rice plants (References 2 and 3), and thus onion extract is considered to be effective for a large number of plants other than rice plants.
Reference 1: https://bmcplantbiol.biomedcentral.com/articles/10.1186/s12870-020-2316-7
Reference 2: https://onlinelibrary.wiley.com/doi/10.1111/plb.12668
Reference 3: https://www.arabidopsis.org/locus?key=27574

As the measurement results of gene expression level in Table 2, the expression level of WRKY71, a gene that contributed to salt stress resistance, increased by 1.36-fold in the above-ground part by the use of onion extract. Generally, physiological disorders such as delayed flowering occur under salt stress conditions, but it has been shown that thale cress overexpressing WRKY71 flowers even under salt stress conditions (Reference 4). Furthermore, it has been reported that similar genes for this molecule exist in a wide range of plants, such as soybeans, oranges, lettuce, tomatoes, and grapes, in addition to thale cress and rice plants (Reference 5), and thus onion extract is considered to be effective for a large number of plants other than rice plants.
Reference 4: https://academic.oup.com/pcp/article/59/2/414/4764040#110738917
Reference 5: https://www.arabidopsis.org/servlets/TairObject?id=28546&type=locus

## Claims

1. A plant growth-promoting composition comprising one or more selected from the group consisting of onion extract and onion powder as an active component.

2. The plant growth-promoting composition according to claim 1, having one or more plant growth-promoting effects selected from the group consisting of elongation of stems, leaves or roots, an increase in the number of leaves, promotion of flowering or fruiting, an increase in the number of flowers or fruits, an increase in the plant body weight or crop yield, greening, and promotion of tillering.

3. The plant growth-promoting composition according to claim 1 or 2, having an effect of improving abiotic stress resistance.

4. The plant growth-promoting composition according to claim 3, having an effect of improving stress resistance to one or more selected from the group consisting of temperature stress, chemical stress, light stress, drought stress, pH stress, salt stress, anoxic stress, herbivory stress, physical stress, and disease stress.

5. The plant growth-promoting composition according to claim 3, which activates genes in a stress response system.

6. A method of promoting plant growth, comprising applying a plant growth-promoting composition containing one or more selected from the group consisting of onion extract and onion powder as an active component to plants, or soil or a culture solution in which plants grows.

7. The method of promoting plant growth according to claim 6, wherein the amount of the plant growth-promoting composition used with respect to the culture solution is 0.001 to 1 mass%.

8. The method of promoting plant growth according to claim 6, wherein the onion extract or onion powder is onion extract or onion powder extracted from one or more parts of an onion discharged from a farm, a sorting house, or a factory.
